# EUROPEAN PATENT APPLICATION

(11) **EP 4 442 642 A1**
(43) Date of publication of application: **09.10.2024**
(21) Application number: 24164872.4
(22) Date of filing: 20.03.2024
(51) Int. Cl.: C01B 32/05, H01M 4/133, H01M 4/587

(54) **HARD CARBON MATERIAL, NEGATIVE ELECTRODE PLATE, AND ELECTROCHEMICAL DEVICE**

(30) Priority: 23.03.2023 CN 202310291167
(71) Applicant: Ningde Amperex Technology Ltd., Ningde City, Fujian 352100 (CN)
(72) Inventor: ZHENG, Zigui, Ningde City, Fujian Province, People s Republic of China, 352100 (CN); YI, Zheng, Ningde City, Fujian Province, People s Republic of China, 352100 (CN); TAN, Fujin, Ningde City, Fujian Province, People s Republic of China, 352100 (CN); XIE, Yuansen, Ningde City, Fujian Province, People s Republic of China, 352100 (CN)
(74) Representative: Icosa

(57) **Abstract**

A hard carbon material has a pore structure. A scattering vector of the pore structure in a small-angle X-ray scattering spectrum is N1 nm⁻¹, and 0.1 ≤ N1 ≤ 7. The hard carbon material exhibits a scattering intensity convex peak. A full-width-at-half-maximum of the convex peak is L1 nm⁻¹, and 0.1 ≤ L1 ≤ 3.5. A pore volume of micropores of the hard carbon material measured by a nitrogen adsorption method is V2 cc/g, and 0 < V2 ≤ 0.01. The pore structure of the hard carbon material of this application includes micropores. During lithium storage, lithium ions can be stored in the micropores, thereby providing a reversible capacity. In addition, when used as a negative active material of an electrochemical device, the hard carbon material of this application endows the electrochemical device with a high energy density, a high first-cycle Coulombic efficiency, and good cycle performance.

## Description

### TECHNICAL FIELD

This application relates to the technical field of electrochemical devices, and in particular, to a hard carbon material, a negative electrode plate, and an electrochemical device.

### BACKGROUND

Electrochemical devices represented by a lithium-ion electrochemical device are distinctly characterized by a high energy density, a long cycle life, little pollution, no memory effect, and the like. As clean energy, the electrochemical devices have been progressively applied to a wide range of fields from electronic products to large-sized devices such as an electric vehicle to meet the strategy of sustainable development of the environment and energy. This imposes higher requirements on the energy density of the electrochemical devices.

Currently, negative active materials of commercial electrochemical devices are still dominated by graphite. Graphite exhibits advantages such as a high electrical conductivity and high stability. However, the theoretical capacity of graphite is approximately 372 mAh/g, and the upper limit of the theoretical capacity has almost been exploited in recent years. It is difficult to further increase the energy density of an electrochemical device that uses graphite as a negative active material. Therefore, developing a negative active material to increase the energy density of electrochemical devices is of great significance to the development of electrochemical devices.

### SUMMARY

Some embodiments of this application provide a hard carbon material, a negative electrode plate, and an electrochemical device to solve the problem of a low energy density of the electrochemical device.

According to a first aspect, an embodiment of this application provides a hard carbon material. The hard carbon material has a pore structure. The pore structure includes micropores. A pore volume of the micropores of the hard carbon material measured by a nitrogen adsorption method is V2, and V2 satisfies: 0 cc/g < V2 ≤ 0.01 cc/g.

A scattering vector of the hard carbon material in a small-angle X-ray scattering spectrum is N1, N1 satisfies 0.1 nm⁻¹ ≤ N1 ≤ 7 nm⁻¹, and the hard carbon material exhibits a scattering intensity convex peak, a full-width-at-half-maximum of the convex peak is L1, and L1 satisfies 0.1 nm⁻¹ ≤ L1 ≤ 3.5 nm⁻¹.

In some exemplary embodiments, a pore volume of the pore structure of the hard carbon material measured by the nitrogen adsorption method is V1, and V1 satisfies: 0 cc/g < V1 ≤ 0.05 cc/ g.

In some exemplary embodiments, the hard carbon material contains a metal element M. The metal element M includes at least one of Na, K, Cs, Mg, Al, Ca, Rb, or Zn. Based on a total mass of the hard carbon material, a mass percent of the metal element M is A%, and A satisfies 0 < A ≤ 0.02.

In some exemplary embodiments, the hard carbon material contains a non-metal element R other than carbon. The non-metal element R includes at least one of H, N, or O. Based on a total mass of the hard carbon material, a mass percent of the non-metal element R is B%, and B satisfies 0 < B ≤ 0.05.

In some exemplary embodiments, an X-ray diffraction pattern of the hard carbon material shows a characteristic peak corresponding to a diffraction angle of 18° to 30°. A full-width-at-half-maximum of the characteristic peak is L2, and L2 satisfies 4° ≤ L2 ≤ 12°.

In some exemplary embodiments, in a button battery that uses metallic lithium as a counter electrode, the hard carbon material satisfies at least one of the following conditions (1) to (5):
(1) a first-cycle delithiation capacity of the hard carbon material is C1 mAh/g, a delithiation capacity of the hard carbon material in a cycling voltage window of 0 Vto 0.15 V is C2 mAh/g, satisfying: 0.55 ≤ C2/C1 ≤ 0.80;
(2) a first-cycle total lithiation capacity of the hard carbon material is C0 mAh/g, and a first-cycle delithiation capacity of the hard carbon material is C1 mAh/g, satisfying: 0.80 ≤ C1/C0 ≤ 0.94;
(3) a first-cycle delithiation capacity of the hard carbon material is C1 mAh/g, a delithiation capacity of the hard carbon material in a cycling voltage window of 0 V to 0.8 V is C3 mAh/g, satisfying: 0.85 ≤ C3/C1 ≤ 0.93;
(4) a gravimetric capacity of the hard carbon material is 500 mAh/g to 8000 mAh/g; or
(5) an average delithiation potential of the hard carbon material is V0, satisfying: 0.20 V ≤ V0 ≤ 0.36 V

In some exemplary embodiments, the hard carbon material satisfies at least one of the following conditions:
condition a: in a Raman spectrum of the hard carbon material obtained in a Raman test, a peak intensity of a peak D is I_{D}, a peak intensity of a peak G is I_{G}, and the I_{D} and I_{G} satisfy: 0.5 ≤ I_{D}/I_{G} ≤ 1.5;
condition b: Dv₅₀ of the hard carbon material satisfies: 3 µm ≤ Dv₅₀ ≤ 15 µm; or
condition c: a specific surface area of the hard carbon material is S 1, and S1 satisfies: 0.5 m²/g < S1 ≤ 50 m²/g.

According to a second aspect, this application provides a negative electrode plate, including:
a negative current collector; and
a negative active material layer, disposed on at least one surface of the negative current collector, where the negative active material layer includes a negative active material, and the negative active material includes the hard carbon material according to any one of the embodiments described above.

In some exemplary embodiments, a compacted density of the negative active material layer is PD g/cm³, and PD satisfies: 0.8 ≤ PD ≤1.3.

In some exemplary embodiments, a porosity of the negative active material layer is S%, and S satisfies: 10 ≤ S ≤ 40.

According to a third aspect, this application provides an electrochemical device, including the negative electrode plate described above.

Based on the hard carbon material, negative electrode plate, and electrochemical device disclosed herein, the hard carbon has a pore structure. The pore structure includes micropores. During lithium storage, lithium ions can be stored in the micropores, thereby providing a reversible capacity. When used as a negative active material of an electrochemical device, the hard carbon material of this application endows the electrochemical device with a high energy density, a high first-cycle Coulombic efficiency, and good cycle performance.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below are merely a part of embodiments of this application. A person skilled in the art may derive other drawings from such drawings without making any creative effort.
FIG. 1 shows a small-angle X-ray diffraction pattern corresponding to negative active materials of Embodiment 4 and Comparative Embodiment 1; and
FIG. 2 shows a pore size distribution curve corresponding to a hard carbon material of Embodiment 4 of this application.

### DETAILED DESCRIPTION OF EMBODIMENTS

The following describes in detail an electrochemical device and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

As mentioned in the background above, seeking a negative active material to increase the energy density of electrochemical devices is of great significance to the development of electrochemical devices.

Among the multitudinous negative active materials to be developed, the hard carbon material has attracted much attention because the material is superior in gravimetric capacity, rate performance, low-temperature performance, and cycle performance. With more than such advantages, the hard carbon material can be used not only as a negative active material of a lithium-ion battery, but also as a negative active material of a sodium-ion battery, and embraces a prospect of broad application.

However, the existing hard carbon material exhibits a high irreversible capacity, a high average delithiation potential, and other defects. When applied to a lithium-ion battery or sodium-ion battery, the hard carbon material increases the energy density of the battery to a very limited degree, and can hardly meet the requirements in practical applications.

In view of the above situation, the applicant hereof discloses a hard carbon material after in-depth thinking. The hard carbon material exhibits a low average delithiation potential, a high first-cycle Coulombic efficiency, and a high capacity, and can increase the energy density of the electrochemical device when applied to an electrochemical device.

The hard carbon material has a pore structure. A scattering vector of the pore structure of the hard carbon material in a small-angle X-ray scattering spectrum is N1 nm⁻¹, and N1 satisfies 0.1 ≤ N1 ≤ 7. The hard carbon material exhibits a scattering intensity convex peak. A full-width-at-half-maximum of the convex peak is L1 nm⁻¹, and L1 satisfies 0.1 ≤ L1 ≤ 3.5.

The pore structure includes micropores. The pore volume of the micropores (a pore diameter is r₀, and r₀ satisfies: r₀ ≤ 2 nm) is V2 cc/g, and V2 satisfies: 0 < V2 ≤ 0.01.

Common hard carbon materials include activated carbon, aerogel, and the like, and generally have a visible pore structure. However, the lithium storage capacity of such materials is extremely low. The first-cycle Coulombic efficiency during lithium storage is mostly less than 40%. A main reason is that the pore structure of such hard carbon materials is an open-pore structure. The open-pore structure is an open-pore structure that can communicate with the outside. Such open-pore structures can adsorb gases such as carbon dioxide and nitrogen. Because an electrolyte solution is also able to infiltrate such pore structures, the pore structures usually form an SEI film preferentially during lithium storage, and are unable to store lithium to provide a reversible capacity. The pore volume of the micropores of the hard carbon material of this application measured by a nitrogen adsorption method is V2 cc/g, satisfying 0 < V2 ≤ 0.01. This indicates that the pore volume of the externally communicating micropores (that is, open pores) in the hard carbon material provided in this application falls within a very small range. The non-externally-communicating pores or micropores (that is, closed pores) in the hard carbon material provided in this application are pores impenetrable by external gases, and are capable of mass transfer, for example, capable of transferring lithium ions and sodium ions. Further, the pore volume of the pore structure of the hard carbon material of this application measured by the nitrogen adsorption method is V1 cc/ g, satisfying 0 < V1 ≤ 0.05. This indicates that the pore volume of the pore structure (that is, open pores) of the hard carbon material provided in this application also falls within a very small range.

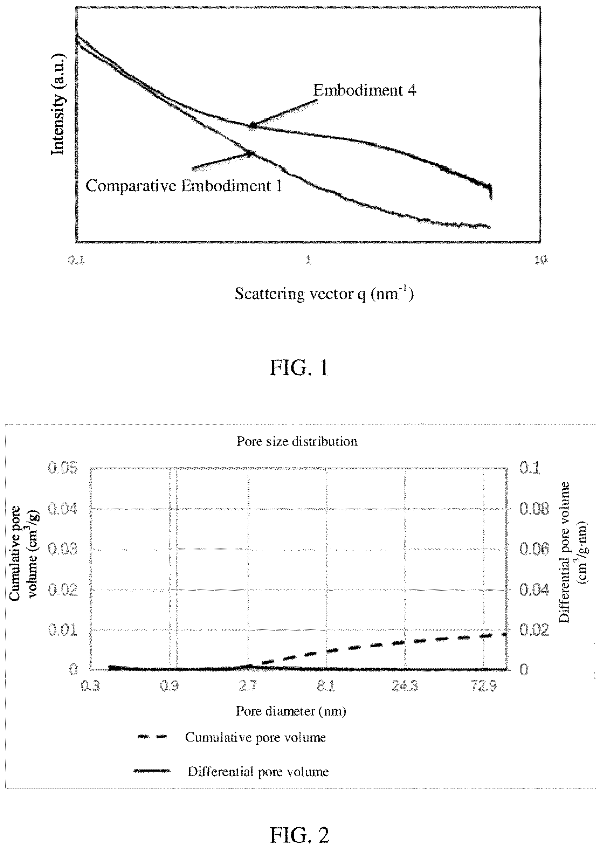

The micropore-rich hard carbon material provided in this application contains the non-externally-communicating micropores, and is hardly measurable by a conventional test method. For example, a high-resolution transmission electron microscope enables observation of the characteristics of only partial regions inside the material, but can hardly represent the whole. In contrast, by means of a small-angle X-ray scattering spectrum test, a scattering-intensity vs scattering-vector variation curve can be used for determining whether the hard carbon material contains a microporous structure. As shown in FIG. 1, which is a small-angle X-ray scattering pattern of the negative active materials of Embodiment 4 and Comparative Embodiment 1 of this application, a scattering intensity convex peak of the hard carbon material of this application is observed within a variation range 0.1 nm⁻¹ to 7 nm⁻¹ of the scattering vector N1. A full-width-at-half-maximum L1 of the convex peak is 0.1 nm ⁻¹ to 3.5 nm⁻¹. Further, as shown in FIG. 2, with reference to a gas adsorption test result, it is evident that the interior of the hard carbon material is rich in micropore structures.

The applicant finds that, when the hard carbon material of this application includes the above micropore structures, lithium ions can be stored in the micropores during lithium storage, thereby providing a reversible capacity. When the hard carbon material is characterized by the above pore structures, the average delithiation potential of hard carbon material with metallic lithium as counter electrode has high reversible capacity at a low-voltage platform. Therefore, when used as a negative active material of an electrochemical device, the hard carbon material of this application endows the electrochemical device with a high energy density, a high first-cycle Coulombic efficiency, and good cycle performance.

In some exemplary embodiments, the hard carbon material contains a metal element M. The metal element M includes at least one of Na, K, Cs, Mg, Al, Ca, Rb, or Zn. Based on a total mass of the hard carbon material, a mass percent of the metal element M is A%, and A satisfies 0 < A ≤ 0.02. For example, the value of A may be 0.005, 0.01, 0.015, 0.02, or a value falling within a range formed by any two thereof. During preparation of the hard carbon material, a precursor of the hard carbon material contains one or more alkali metals as catalysts. Therefore, some alkali metals may remain inside the hard carbon material. Incomplete removal of the alkali metal catalysts will affect the micropore content in the hard carbon material. Controlling the mass percent A% of the metal element M in the hard carbon material to be 0% to 0.02% enables the prepared hard carbon material to contain micropores, and in turn, endows the hard carbon material with a higher lithium storage capacity.

In some exemplary embodiments, the hard carbon material contains a non-metal element R other than carbon. The non-metal element R includes at least one of H, N, or O. Based on a total mass of the hard carbon material, a mass percent of the non-metal element R is B%, and B satisfies 0 < B ≤ 0.05. For example, the value of B of the hard carbon material may be 0.01, 0.02, 0.03, 0.04, 0.05, or a value falling within a range formed by any two thereof.

In a carbonization stage during preparation of the hard carbon material provided in some embodiments of this application, a part of the non-metal element R can be brought out together in a reduction process of catalysts that remain in the precursor. Therefore, the content of the non-metal element R in the hard carbon material of this application can reach a relatively low level by applying just a relatively low heat treatment temperature. With the hetero-non-metal elements maintained at a low content, irreversible reactions between the hetero elements and lithium can be reduced in a lithium storage process of the hard carbon material, thereby increasing the reversible capacity of the negative active material. Therefore, when applied to an electrochemical device, the negative active material of this application further increases the energy density and the first-cycle Coulombic efficiency of the electrochemical device.

An X-ray diffraction pattern of the hard carbon material shows a characteristic peak corresponding to a diffraction angle of 18° to 30°. A full-width-at-half-maximum of the characteristic peak is L2, and L2 satisfies 4° ≤ L2 ≤ 12°. The hard carbon material exhibits a 002 interplanar spacing of 0.37 nm to 0.41 nm, much larger than the 002 interplanar spacing of graphite. The relatively large 002 interplanar spacing facilitates rapid deintercalation of lithium ions inside the hard carbon material, thereby improving the reversible capacity and kinetic performance of the hard carbon material used as a negative active material. Therefore, when applied to an electrochemical device, the negative active material of this application increases the energy density and the Crate performance of the electrochemical device.

In some exemplary embodiments, in a button battery that uses metallic lithium as a counter electrode, a first-cycle total lithiation capacity of the hard carbon material is C0 mAh/g, and a first-cycle delithiation capacity of the hard carbon material is C1 mAh/g, satisfying: 0.80 ≤ C1/C0 ≤ 0.94. The hard carbon material of this application includes a special micropore structure, and lithium ions can be stored in the micropores during lithium storage, thereby providing a relatively high reversible capacity.

In some exemplary embodiments, in a button battery that uses metallic lithium as a counter electrode, the gravimetric capacity of the hard carbon material is 500 mAh/g to 8000 mAh/g. The hard carbon material of this application includes a special micropore structure, and lithium ions can be stored in the micropores during lithium storage, thereby increasing the lithium storage capacity and endowing the hard carbon material with a relatively high gravimetric capacity.

In some exemplary embodiments, in a button battery that uses metallic lithium as a counter electrode, a first-cycle delithiation capacity of the hard carbon material is C1 mAh/g, and a delithiation capacity of the hard carbon material in a cycling voltage window of 0 V to 0.15 V is C2 mAh/g, satisfying: 0.55 ≤ C2/C1 ≤ 0.80. In a process of testing the delithiation capacity of the hard carbon material using metallic lithium as a counter electrode, the lithium ions stored in the micropores of the hard carbon material are usually deintercalated in a cycling voltage window of 0 V to 0.15 V. Therefore, C₂ is highly correlated with the microporous structure in the hard carbon material. When C₂ meets the above conditions, it means that the microporous structure in the hard carbon material can provide a higher reversible capacity, and therefore, the delithiation capacity of the hard carbon material in a low-voltage platform represents a relatively high proportion in the total delithiation capacity.

In some exemplary embodiments, in a button battery that uses metallic lithium as a counter electrode, a first-cycle delithiation capacity of the hard carbon material is C1 mAh/g, and a delithiation capacity of the hard carbon material in a cycling voltage window of 0 V to 0.8 V is C3 mAh/g, satisfying: 0.85 ≤ C3/C1 ≤ 0.93. When the hard carbon material satisfies 0.85 ≤ C3/C1 ≤ 0.93, the ratio of the delithiation capacity of the hard carbon material in the cycling voltage window of 0 V (vs Li⁺/Li) to 0.8 V (vs Li⁺/Li) to the total capacity exceeds 0.85, indicating that the hard carbon material exhibits a relatively high delithiation capacity when being cycled at a relatively low potential, thereby further reducing the average delithiation potential of the hard carbon material. Therefore, used in an electrochemical device, the negative active material of this application can further improve the energy density of the electrochemical device.

In some exemplary embodiments, in a button battery that uses metallic lithium as a counter electrode, the average delithiation potential of the hard carbon material is V0, and V0 satisfies the following condition: 0.20 V ≤ V0 ≤ 0.36 V The special pore structure of the hard carbon material disclosed in some embodiments of this application endows the hard carbon material with a higher reversible capacity, so that an average delithiation potential of the hard carbon material is 0.20 V (vs Li⁺/Li) to 0.36 V (vs Li⁺/Li) using metallic lithium as a counter electrode. A person skilled in the art may obtain, in many ways, the hard carbon material containing the pore structure of this application to make the average delithiation potential of the negative active material be 0.20 V (vs Li⁺/Li) to 0.36 V (vs Li⁺/Li) using metallic lithium as a counter electrode.

In some exemplary embodiments, the hard carbon material satisfies condition a: in a Raman spectrum of the hard carbon material obtained in a Raman test, a peak intensity of a peak D is I_{D}, a peak intensity of a peak G is I_{G}, and the I_{D} and I_{G} satisfies: 0.5 ≤ I_{D}/I_{G} ≤ 1.5. I_{D} represents a peak intensity with a Raman shift of 1300 cm⁻¹ to 1400 cm⁻¹ in a Raman spectroscopy test, and I_{G} represents a peak intensity with a Raman shift of 1550 cm⁻¹ to 1650 cm⁻¹ in a Raman spectroscopy test. In this application, when the I_{D}/I_{G} ratio of the hard carbon material falls within 0.5 ≤ I_{D}/I_{G} ≤ 1.5, the content of defects of the hard carbon material is relatively high. Definitely, such defects may be caused by disordered microcrystalline structures of the hard carbon material, or may be caused by micropore defects inside the hard carbon material. A high content of defects enables the hard carbon material to provide more lithium ion adsorption sites, thereby improving the fast charge and fast discharge capabilities of the material. Therefore, when used as a negative active material of an electrochemical device, the hard carbon material of this application endows the electrochemical device with good kinetic performance.

In some exemplary embodiments, the hard carbon material satisfies condition b: Dv₅₀ of the hard carbon material satisfies 3 µm ≤ Dv₅₀ ≤ 15 µm. For example, Dv₅₀ of the hard carbon material may be 3 µm, 5 µm, 7 µm, 9 µm, 10 µm, 11 µm, 12 µm, 13 µm, 14 µm, 15 µm, or a value falling within a range formed by any two thereof. Optionally, the hard carbon material may be primary particles, that is, single crystalline particles. When the volume median diameter of the hard carbon material satisfies 3 µm ≤ Dv₅₀ ≤ 15 µm, on the one hand, the hard carbon material is highly capable of being infiltrated by an electrolyte solution. On the other hand, the specific surface area of the hard carbon material is caused to be relatively small, so that fewer active ions are consumed by formation of an SEI film on the surface of the hard carbon material during an initial charge. Therefore, when used as a negative active material of an electrochemical device, the hard carbon material of this application endows the electrochemical device with both good kinetic performance and a high first-cycle Coulombic efficiency.

In some exemplary embodiments, the hard carbon material satisfies condition c: a specific surface area of the hard carbon material is S1, and S1 satisfies: 0.5 m²/g ≤ S1 ≤ 50 m²/g. For example, the specific surface area of the hard carbon material may be 0.5 m²/g, 1 m²/g, 3 m²/g, 7 m²/g, 10 m²/g, 30 m²/g, 50 m²/g, or a value falling within a range formed by any two thereof.

Understandably, when the specific surface area of the negative active material particles is larger, the area of the SEI film formed on the surface of the negative active material particles during the initial charge of the electrochemical device is larger, and more active ions are consumed. In addition, when the specific surface area of the negative active material particles is larger, more binder is consumed to form the negative active material layer, and in turn, the internal resistance of the negative active material layer is higher. When the specific surface area S1 of the hard carbon material falls within 0.5 m²/g ≤ S1 ≤ 50 m²/g, the hard carbon material applied to the electrochemical device not only produces an appropriate area of the SEI film formed during the initial charge, but also reduces the dosage of the binder in the negative active material layer. In this way, the hard carbon material applied to the secondary battery reduces the loss of active ions and the internal resistance of the negative active material layer, thereby improving the first-cycle Coulombic efficiency, energy density, cycle performance, and safety performance of the electrochemical device.

As an example, the hard carbon material of this application may be obtained in the following steps S10 to S40. It is hereby noted that the hard carbon material of this application may be obtained in various ways. This example is merely intended to explain this application, but not to limit this application.

Step S10: Adding a reactant monomer I at a molar fraction of M1 and a catalyst at a molar fraction of M2 into deionized water, where the mass percent of the deionized water is N times the mass percent of the reactant monomer I. Stirring well, and then adding formaldehyde at a molar fraction of M3 and a mass percent of 37%, and continuing to stir. Increasing the temperature to a value of 70 °C to 250 °C, keeping reaction for 0.5 to 24 hours, and crushing and drying the coagulated resin to obtain a precursor material.

In step S10, the range of the M2/M1 ratio is 0.01 to 1.5, the M3/M1 ratio is 0 to 4, and N is 5 to 50. The reactant monomer I may be any one of glucose, starch, fructose, phenol, m-cresol, 1,3,5-xylenol, resorcinol, o-cresol, p-cresol, p-nonylphenol, 2-hydroxymethylphenol, 2,4,6-trihydroxymethylphenol, 1,4-hydroxyphenylarsonic acid, 5-hydroxyisophthalic acid, 2,5-dihydroxyterephthalic acid, 2,4-dihydroxybenzoic acid, or m-hydroxybenzoic acid. The catalyst may be one or more of lithium hydroxide, sodium hydroxide, potassium hydroxide, magnesium hydroxide, cesium hydroxide, rubidium hydroxide, calcium hydroxide, or another alkali metal hydroxide.

The precursor material disclosed in an embodiment of this application may be a material prepared by the method in step S10, or may be poly(acrylic acid-co-maleic acid), a metal salt compound of highly carboxylated lignin, or the like.

S20. Putting the precursor in an inert atmosphere. Increasing the temperature to a value of 500 °C to 900 °C at a speed of 0.5 to 10 °C/min, and then keeping the temperature constant for 0.5 to 5 hours to pre-carbonize the precursor. Subsequently, removing impurities of the pre-carbonized product by acid-washing, and further carbonizing the purified hard carbon material. Specifically, placing the purified hard carbon material into an inert atmosphere, increasing the temperature to a value of 1000 °C to 1600 °C at a speed of 0.5 °C/min to 10 °C/min, and then keeping the temperature constant for 0.5 to 5 hours to obtain a carbonized product.

In step S20, the inert atmosphere may include a gas that does not react parasitically with the pre-carbonized product, for example, may be a nitrogen atmosphere, an argon atmosphere, or another rare gas atmosphere. The gas flow speed of the inert atmosphere may be 0.1 to 5 L/min.

S30. Putting the carbonized product into a reducing atmosphere. Increasing the temperature to a value of 500 °C to 1100 °C at a speed of 0.5 to 20 °C/min, and then keeping the temperature constant for a period of time to obtain a hard carbon material.

In step S30, the reducing atmosphere may be an atmosphere containing a reducing gas, for example, may be an acetylene-argon mixed gas in which the mass percent of acetylene is 5%, or a methane-argon mixed gas in which the mass percent of methane is 10%. The gas flow speed of the reducing atmosphere may be 0.1 to 3 L/min. In step S30, the constant-temperature duration may be 0.1 to 8 hours.

In the above example, the catalyst is introduced into the hard carbon precursor material. During the pre-carbonization, the catalyst creates pores inside the hard carbon material by occupying sites and carbonizing with the hard carbon material, and then the residual template agent is washed away by acid-washing. Therefore, after carbonization, an appropriate micropore structure can be formed inside the material, and the micropore content is relatively high. By heat-treating the carbonized product in the reducing atmosphere, on the one hand, a dense cladding layer can be formed on the surface of the carbonized product to obtain a hard carbon material that is rich in micropores inside the particles.

In this application, the externally communicating pore structures in the hard carbon material may be measured by a method known in the art. For example, the pore structures may be measured with an ASAP2460 physical adsorption analyzer in the following process: pretreating a negative active material powder by drying and degassing the powder, measuring different amounts of adsorbed nitrogen under different test pressures in a nitrogen atmosphere by use of the ASAP2460 physical adsorption analyzer, and plotting adsorption-and-desorption isotherms; and determining the shape of the pores based on the shape of a hysteresis loop, and fitting a pore size distribution curve of the micropores by using a density functional theory (DFT) model, so as to obtain the content and pore diameter of the externally communicating micropores.

In this application, the micropore structures inside the hard carbon material may be measured by a method known in the art. For example, a small-angle X-ray scattering test may be performed to determine how the scattering intensity of a specimen varies within a scattering vector range of 0.01 nm⁻¹ to 7 nm⁻¹.

In this application, the mass percent A% of the metal element of the hard carbon material based on the total mass of the hard carbon material may be measured by using a method known in the art. For example, the value of A of the negative active material may be measured by using inductively coupled plasma (ICP) optical emission spectroscopy.

In this application, the mass percent B% of the non-metal element of the hard carbon material based on the total mass of the hard carbon material may be measured by using a method known in the art. For example, the value of B of the negative active material may be determined with an elemental analyzer (Elementar Unicube).

In this application, the X-ray diffraction pattern of the hard carbon material bears a meaning well known in the art, and the value is measured by using an X-ray powder diffractometer.

In this application, the average delithiation potential of the hard carbon material using metallic lithium as a counter electrode bears a meaning well known in the art, and may be determined by a method known in the art. For example, an exemplary process of determining the average delithiation potential is: mixing well a hard carbon material and an appropriate amount of binder, conductive agent, and solvent to obtain a negative electrode slurry; coating a surface of a negative current collector with the negative electrode slurry to obtain a negative electrode plate; preparing a button battery by assembling the negative electrode plate with a metallic lithium sheet used as a positive electrode; charging and discharging the button battery to determine the charge capacity and the charge energy of the button battery; and dividing the charge capacity by the charge energy to obtain the average delithiation potential of the hard carbon material.

In this application, C0 mAh, C1 mAh, C2 mAh, and C3 mAh bear the meanings well known in the art, and the C1/C0 ratio, the C2/C1 ratio, and the C3/C1 ratio may be determined by using a method known in the art. For example, the ratio may be determined by the following process: mixing well a hard carbon material and an appropriate amount of binder, conductive agent, and solvent to obtain a negative electrode slurry; coating a surface of a negative current collector with the negative electrode slurry to obtain a negative electrode plate; preparing a button battery by assembling the negative electrode plate with a metallic lithium sheet used as a positive electrode plate; cycling the button battery by charging and discharging, and dividing the charge energy by the charge capacity to obtain an average delithiation potential of the hard carbon material; dividing the first-cycle delithiation capacity by the first-cycle lithium storage capacity to obtain the C1/C0 ratio; dividing the gravimetric capacity in a delithiation voltage window of 0 V (vs Li⁺/Li) to 0.15 V (vs Li⁺/Li) by the total gravimetric capacity to obtain the C2/C1 ratio; and dividing the gravimetric capacity in a delithiation voltage window of 0 V (vs Li⁺/Li) to 0.8 V (vs Li⁺/Li) by the total gravimetric capacity to obtain the C3/C1 ratio.

In this application, the volume median diameter Dv₅₀ of the hard carbon material bears the meaning well known in the art, and is a value than which a half (50%) of the particles of the hard carbon material are smaller in diameter, and the other half of the particles are larger in a volume-based particle size distribution curve, and may be determined by a method known in the art. For example, the volume median diameter may be measured by using a laser particle size analyzer (such as Mastersizer 2000E manufactured by Britain-based Malvern Instruments Ltd.) by reference to the GB/T 19077-2016 particle size distribution laser diffraction method.

In this application, the specific surface area of the hard carbon material bears a meaning well known in the art, and may be determined by a method known in the art. For example, the specific surface area of the negative active material is determined by a nitrogen adsorption/desorption method with a specific surface area analyzer (Tristar II 3020M).

In this application, the I_{D}/I_{G} ratio of the hard carbon material bears a meaning well known in the art, and may be determined by a method known in the art. For example, the degree of surface defects of the specimen is determined in a Raman spectroscopy test by using a laser microscopic confocal Raman spectrometer.

An embodiment of this application further provides a negative electrode plate. The negative electrode plate includes a negative current collector and a negative active material layer. The negative active material layer is disposed on at least one surface of the negative current collector. The negative active material layer includes a negative active material. The negative active material includes the hard carbon material described above.

In some exemplary embodiments, a compacted density of the negative active material layer is PD g/cm³, and PD satisfies: 0.8 ≤ PD ≤1.3. A porosity of the negative active material layer is S%, and S satisfies: 10 ≤ S ≤ 40. In the related art, the compacted density of the negative active material layer made of graphite is typically 1.5 g/cm³ or above. A relatively low compacted density of the negative active material layer indicates that many pores still exist in the negative active material layer, so that the electrolyte solution can thoroughly infiltrate the particles of the active material to enhance the kinetic performance. However, if the porosity is unduly high, the number of contact points between the particles of the active material is reduced, the internal resistance of the battery cell is increased, and the energy density of the substrate is impaired. The hard carbon material provided by this application exhibits a relatively high lithium storage capacity and a low average delithiation potential, and can make up for a disadvantage of a low compacted density of the negative active material layer, thereby imparting a higher volumetric energy density to the electrochemical device that employs the negative electrode plate of this application.

The hard carbon material provided in this application may be mixed with artificial graphite to maximize the energy density by increasing the compacted density of the negative active material layer.

The negative current collector of the negative electrode plate is not particularly limited in this application. The negative current collector may be metal foil, a porous metal sheet, or a composite current collector. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, or silver alloy). The polymer material substrate may be, for example, polypropylene (PP), polyethylene terephthalate (PET), polybutylene terephthalate (PBT), polystyrene (PS), or polyethylene (PE). As an example, the negative electrode plate is a negative electrode plate of a lithium-ion battery, and the negative current collector may be copper foil. As another example, the negative electrode plate is a negative electrode plate of a sodium-ion battery, and the negative current collector may be copper foil or aluminum foil.

In some exemplary embodiments, the negative current collector includes two surfaces opposite to each other in a thickness direction of the current collector. The negative active material layer may be disposed on either or both of the two surfaces of the negative current collector. For example, the negative current collector includes two surfaces opposite to each other in a thickness direction of the current collector, and the negative active material layer is disposed on either or both of the two opposite surfaces of the negative current collector.

In some exemplary embodiments, the negative active material layer further optionally includes a binder. The binder may be at least one selected from: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, or nylon.

In some exemplary embodiments, the negative active material layer further optionally includes a conductive agent. The conductive agent may be selected from a carbon-based material, a metal-based material, a conductive polymer, or any combination thereof. As an example, the carbon-based material may be at least one selected from natural graphite, artificial graphite, superconductive carbon, acetylene black, carbon black, Ketjen black, carbon dots, carbon nanotubes, graphene, or carbon nanofibers. The metal-based material may be selected from metal powder or metal fibers. The conductive polymer may include a polyphenylene derivative.

In some exemplary embodiments, the negative active material layer further optionally includes other agents, such as a thickener (for example, sodium carboxymethyl cellulose (CMC-Na)).

The negative electrode plate in this application may be prepared by a conventional method in this field. For example, a method for preparing the negative electrode plate includes: dispersing hard carbon and optionally other negative active materials, a conductive carbon, a binder, and a thickener in a solvent such as N-methyl-pyrrolidone (NMP) or deionized water to form a homogeneous negative electrode slurry, coating a negative current collector with the negative electrode slurry, and performing steps such as drying and cold pressing to obtain a negative electrode plate.

It is hereby noted that the parameters of the negative active material layer described herein mean the parameters of a negative active material layer on a single side of the negative current collector. When the negative active material layer is disposed on both sides of the negative current collector, the parameter settings are considered to fall within the protection scope of this application as long as the parameters of the negative active material layer on any one side of the negative current collector satisfy the parameter ranges specified herein.

In addition, the negative electrode plate according to this application does not exclude other additional functional layers different from the negative active material layer. For example, in some embodiments, the negative electrode plate according to this application further includes a conductive undercoat layer (for example, formed of a conductive agent and a binder) disposed on a surface of the negative current collector and sandwiched between the negative current collector and the negative active material layer. In some other embodiments, the negative electrode plate according to this application further includes a protection layer overlaying the surface of the negative active material layer.

In this application, the compacted density of the negative active material layer bears a meaning well known in the art, and may be determined by a method known in the art. An exemplary method for determining the compacted density includes: weighing a piece of a treated negative electrode plate with an area of S by using an electronic balance (both sides of the negative current collector are coated with the negative active material layer), so as to obtain a weight denoted as W₁; measuring the thickness T₁ of the negative electrode plate with a high-precision micrometer; washing off the negative active material layer by using a solvent and performing drying; measuring the weight of the negative current collector, denoted as W₂; measuring the thickness T₂ of the negative current collector with a high-precision micrometer; and calculating the compacted density of the negative active material layer on a single side of the negative current collector as: PD = (W₁ - W₂)/[(T₁ - T₂)·S].

In this application, the porosity of the negative active material layer bears a meaning well known in the art, and may be determined by a method known in the art. For example, the porosity of the negative active material layer may be determined with a true density tester with reference to the standard GB/T24586-2009 *Iron ores-Determination of Apparent Density, True Density And Porosity.*

It is hereby noted that, in this application, the parameters for the negative active material or the negative active material layer may be sampled and tested during preparation of the battery, or may be sampled and tested among the prepared electrochemical devices.

When the specimen is taken from a prepared lithium-ion battery, as an example, the sampling may be performed according to the following steps (1) to (3).
(1) Discharge the lithium-ion battery (for safety reasons, the battery is generally caused to be in a fully discharged state); disassemble the battery and take out a negative electrode plate; soak the negative electrode plate in dimethyl carbonate (DMC) for a period (for example, 2 to 10 hours); and then take out the negative electrode plate, dry the negative electrode plate at a specified temperature for a specified time (for example, at 60 °C for 4 hours), and take out the dried negative electrode plate. At this time, specimens may be taken from the dried negative electrode plate to test various relevant parameters of the negative active material of this application.
(2) Bake, at a specified temperature for a specified time (for example, at 400 °C for 2 hours), the negative electrode plate dried in step (1); and select a region on the baked negative electrode plate randomly to take specimens of the negative active material (for example, by scraping powder with a scraper).
(3) Sieve the negative active material collected in step (2) (for example, through a 200-mesh sieve) to finally obtain specimens ready for testing the parameters of the negative active material of this application.

An embodiment of this application further provides an electrochemical device, including the negative electrode plate.

A third aspect of this application discloses an electrochemical device. The electrochemical device includes any device in which an electrochemical reaction occurs to implement conversion between chemical energy and electrical energy. The electrochemical device may be a primary battery or a secondary battery. Specific examples of the electrochemical device include all kinds of lithium primary batteries, lithium secondary batteries, sodium primary batteries, or sodium secondary batteries.

In some embodiments, the electrochemical device of this application includes the negative electrode plate, a positive electrode plate, a separator, and an electrolyte solution.

The material, composition, and manufacturing method of the positive electrode plate used in the electrochemical device according to this application may include any technology known in the prior art.

The positive electrode plate includes a positive current collector and a positive active material layer disposed on at least one surface of the positive current collector and containing a positive active material. As an example, the positive current collector includes two surfaces opposite to each other in a thickness direction of the current collector. The positive active material layer is disposed on one or both of the two opposite surfaces of the positive current collector.

In some embodiments, the positive active material layer includes a positive active material. The specific type of the positive active material is not particularly limited, and may be selected as required.

In some embodiments, the electrochemical device is a lithium-ion battery. The positive active material may include one or more of lithium transition metal oxide, olivine-structured lithium-containing phosphate, or a modified compound thereof. In the electrochemical device according to this application, the modified compound of each positive active material described above may be formed by modifying the positive active material, for example, by doping, surface coating, or both doping and surface coating. As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, or a modified compound thereof. Of such positive active materials, one may be used alone, or at least two may be used in combination.

In some embodiments, the electrochemical device is a sodium-ion battery. The positive active material may be a positive active material well known in the art for use in a sodium-ion secondary battery. As an example, the positive active material may include one or more of a sodium transition metal oxide, a polyanionic compound, or a Prussian blue compound.

As an example, examples of the sodium transition metal oxide include: Na₁₋ₓCuₕFeₖMnₗM¹ₘO_{2-y}, where M¹ is one or more of Li, Be, B, Mg, Al, K, Ca, Ti, Co, Ni, Zn, Ga, Sr, Y, Nb, Mo, In, Sn, or Ba, 0 < x ≤ 0.33, 0 < h ≤ 0.24, 0 ≤ k ≤ 0.32, 0 < 1 ≤ 0.68, 0 ≤ m < 0.1, h + k + l + m = 1, and 0 ≤ y < 0.2; Na_{0.67}Mn_{0.7}Ni_{z}M²_{0.3-z}O₂, where M² is one or more of Li, Mg, Al, Ca, Ti, Fe, Cu, Zn, or Ba, and 0 < z ≤ 0.1; and NaₐLi_{b}Ni_{c}Mn_{d}FeₑO₂, where 0.67 < a ≤ 1, 0 < b < 0.2, 0 < c < 0.3, 0.67 < d + e < 0.8, and b + c + d + e = 1. As an example, examples of the polyanionic compound include: A¹_{f}M³_{g}(PO₄)ᵢOⱼX¹₃₋ⱼ, where A¹ is one or more of H, Li, Na, K, or NH₄, M³ is one or more of Ti, Cr, Mn, Fe, Co, Ni, V, Cu, or Zn, X¹ is one or more of F, Cl, or Br, 0 < f ≤ 4, 0 < g ≤ 2, 1 ≤ i ≤ 3, and 0 ≤ j ≤ 2; NaₙM⁴PO₄X², where M⁴ is one or more of Mn, Fe, Co, Ni, Cu, or Zn, X² is one or more of F, Cl, or Br, and 0 < n ≤ 2; NaₚM⁵_{q}(SO₄)₃, where M⁵ is one or more of Mn, Fe, Co, Ni, Cu, or Zn, 0 < p ≤ 2, and 0 < q ≤ 2; and, NaₛMnₜFe₃₋ₜ(PO₄)₂(P₂O₇), where 0 < s ≤ 4, 0 ≤ t ≤ 3, for example t is 0, 1, 1.5, 2, or 3.

As an example, examples of the Prussian blue compound include: A²ᵤM⁶ᵥ[M⁷(CN)₆]_{w}·xH₂O, where A² is one or more of H⁺, NH₄⁺, an alkali metal cation, or alkaline earth metal cation, M⁶ and M⁷ each are independently one or more of transition metal cations, 0 < u ≤ 2, 0 < v ≤ 1, 0 < w ≤ 1, and 0 < x < 6. For example, A² is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, or Ra²⁺, and M⁶ and M⁷ each are independently cations of one or more transition metal elements among Ti, V, Cr, Mn, Fe, Co, Ni, Cu, Zn, Sn, and W. Preferably, A² is one or more of Li⁺, Na⁺, K⁺; M⁶ is a cation of one or more transition metal elements among Mn, Fe, Co, Ni, and Cu; and M⁷ is a cation of one or more transition metal elements among Mn, Fe, Co, Ni, and Cu.

In some embodiments, the positive active material layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive active material layer further optionally includes a conductive agent. As an example, the conductive agent may be selected from a carbon-based material, a metal-based material, a conductive polymer, or any combination thereof. As an example, the carbon-based material may be at least one selected from natural graphite, artificial graphite, superconductive carbon, acetylene black, carbon black, Ketjen black, carbon dots, carbon nanotubes, graphene, or carbon nanofibers. The metal-based material may be selected from metal powder or metal fibers. The conductive polymer may include a polyphenylene derivative.

In some embodiments, the positive current collector may be metal foil or a composite current collector. As an example of the metal foil, the positive current collector may be an aluminum foil. The composite current collector may include a polymer material substrate and a metal material layer formed on at least one surface of the polymer material substrate. As an example, the metal material may be one or more selected from aluminum, aluminum alloy, nickel, nickel alloy, titanium, titanium alloy, silver, or silver alloy. As an example, the polymer material substrate may be selected from polypropylene, polyethylene terephthalate, polybutylene terephthalate, polystyrene, polyethylene, or the like.

The positive electrode plate in this application may be prepared by a conventional method in this field. For example, the positive active material layer is typically formed by coating a positive current collector with a positive electrode slurry and then performing drying and cold pressing. The positive electrode slurry is generally formed by dispersing a positive active material, an optional conductive agent, an optional binder, and any other ingredients into a solvent and then stirring well. The solvent may be, but without being limited to, N-methyl-pyrrolidone (NMP).

The positive electrode plate according to this application does not exclude other additional functional layers different from the positive active material layer. For example, in some embodiments, the positive electrode plate according to this application further includes a conductive undercoat layer (for example, formed of a conductive agent and a binder) disposed on a surface of the positive current collector and sandwiched between the positive current collector and the positive active material layer. In some other embodiments, the positive electrode plate according to this application further includes a protection layer overlaying the surface of the positive active material layer.

The electrolyte solution serves to conduct active ions between the positive electrode plate and the negative electrode plate. The electrolyte solution for use in the electrochemical device of this application may be an electrolyte solution known in the prior art.

In some embodiments, the electrolyte solution may include an organic solvent, an electrolyte salt, and optionally a binder. The types of the organic solvent, the lithium salt, and the additive are not particularly limited, and may be selected according to actual needs.

In some embodiments, the electrochemical device is a lithium-ion battery, and the electrolyte salt may include a lithium salt. As an example, the lithium salt includes, but is not limited to, at least one of lithium hexafluorophosphate (LiPF₆), (lithium tetrafluoroborate (LiBF₄), lithium perchlorate (LiClO₄), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato) borate (LiBOB), lithium difluorophosphate (LiPO2F₂), lithium difluoro(bisoxalato) phosphate (LiDFOP), or lithium tetrafluoro(oxalato) phosphate (LiTFOP). Of the foregoing lithium salts, one may be used alone, or two or more may be used simultaneously.

In some embodiments, the electrochemical device is a sodium-ion battery, and the electrolyte salt may include a sodium salt. As an example, the sodium salt may be at least one selected from NaPF₆, NaClO₄, NaBCl₄, NaSO₃CF₃, or Na(CH₃)C₆H₄SO₃.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE). Of the foregoing organic solvents, one may be used alone, or two or more may be used simultaneously. Optionally, two or more of the foregoing organic solvents are used simultaneously.

In some embodiments, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

As examples, such additives include, but are not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (ADN), tris(trimethylsilane) phosphate (TMSP), or tris(trimethylsilane) borate (TMSB).

The electrolyte solution may be prepared by a conventional method in this field. For example, the electrolyte solution may be obtained by mixing well an organic solvent, an electrolyte salt, and an optional additive. The order of adding the ingredients is not particularly limited. For example, the electrolyte salt and the optional additive may be added into the organic solvent and mixed well to obtain the electrolyte solution; or, the electrolyte salt may be added into the organic solvent, and then the optional additive is added into the organic solvent and mixed well to obtain the electrolyte solution.

Disposed between the positive electrode plate and the negative electrode plate, the separator primarily serves to prevent a short circuit between the positive electrode plate and the negative electrode plate while allowing passage of active ions. The type of the separator is not particularly limited in this application, and may be any well-known porous separator that is highly stable both chemically and mechanically.

In some embodiments, the material of the separator may be one or more selected from, but without being limited to, glass fibers, non-woven fabric, polyethylene, polypropylene, or polyvinylidene fluoride. Optionally, the material of the separator may include polyethylene and/or polypropylene. The separator may be a single-layer film or a multilayer composite film. When the separator is a multilayer composite film, materials of different layers may be identical or different. In some embodiments, the separator may be coated with a ceramic coating or a metal oxide coating.

In some embodiments, the positive electrode plate, the negative electrode plate, and the separator may be made into an electrode assembly by winding or stacking.

The electrochemical device according to this application further includes an outer package configured to package the electrode assembly and the electrolyte solution. In some embodiments, the outer package may be a hard shell such as a hard plastic shell, an aluminum shell, a steel shell, or the like; or, may be a soft package such as a pouch-type package. The soft package may be made of a material such as at least one of polypropylene (PP), polybutylene terephthalate (PBT), or polybutylene succinate (PBS).

The shape of the electrochemical device is not particularly limited in this application, and may be cylindrical, prismatic or in any other shape. The positive electrode plate, the negative electrode plate, and the separator may be made into the electrode assembly by winding or stacking. The electrode assembly is packaged in the electrochemical device. The number of electrode assemblies included in an electrochemical device may be one or more, and may be determined by a person skilled in the art as actually required.

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

### 1. Preparing the hard carbon material

Adding resorcinol at a molar fraction of 0.16 and sodium hydroxide at a molar fraction of 0.16 into deionized water, where the mass percent of the deionized water is 10 times the mass percent of the resorcinol. Stirring well, dissolving the constituents thoroughly, and then adding formaldehyde at a molar fraction of 0.32 and a mass percent of 37%, and continuing to stir. Increasing the temperature to 90 °C, keeping reaction for 12 hours, and crushing and drying the resultant resin to obtain a precursor material. Putting the precursor material in an inert atmosphere. Increasing the temperature to 800 °C at a speed of 3 °C/min, and then keeping the temperature constant for 4 hours to pre-carbonize the precursor material. Subsequently, further carbonizing the purified pre-carbonized product. Specifically, putting 10 grams of acid-washed pre-carbonized product into an inert atmosphere, increasing the temperature to 1100 °C at a speed of 5 °C/min, and then keeping the temperature constant for 1 hour to obtain a carbonized product. Putting 10 grams of carbonized product into a 5 wt% methane-argon mixed atmosphere that is fed in at a flow speed of 0.5 L/min. Increasing the temperature to 900 °C at a speed of 1 °C/min, and then keeping the temperature constant for 2 hours to obtain a hard carbon material.

### 2. Preparing a negative electrode plate

Dissolving the hard carbon material as a negative active material, styrene-butadiene rubber as a binder, and sodium carboxymethyl cellulose (CMC-Na) at a mass ratio of 97: 1.5: 1.5 in deionized water to form a negative electrode slurry (in which the solid content is 40 wt%). Using a 10 µm-thick copper foil as a negative current collector. Coating the negative current collector with the negative electrode slurry for a thickness of 50 µm. Drying the slurry at 85 °C, and then performing cold pressing, cutting, and slitting. Drying the current collector under a 120 °C vacuum condition for 12 hours to obtain a negative electrode plate.

### 3. Preparing a positive electrode plate

Mixing lithium cobalt oxide as a positive active material, conductive carbon black (Super P), and polyvinylidene difluoride (PVDF) at a mass ratio of 97: 1.4: 1.6, adding N-methyl-pyrrolidone (NMP) as a solvent, and stirring the mixture well to obtain a positive electrode slurry in which the solid content is 72 wt%. Coating a positive current collector aluminum foil with the positive electrode slurry evenly for a thickness of 80 µm. Drying the slurry at 85 °C, and then performing cold pressing, cutting, and slitting. Drying the current collector under an 85 °C vacuum condition for 4 hours to obtain a positive electrode plate.

### 4. Preparing an electrolyte solution

Mixing ethylene carbonate (EC), propylene carbonate (PC), and diethyl carbonate (DEC) at a mass ratio of 1: 1: 1 to obtain an organic solvent. Dissolving LiPF₆ in the organic solvent, and then adding fluoroethylene carbonate (FEC) and stirring well to obtain an electrolyte solution, where based on a total mass of the electrolyte solution, a mass percent of LiPF₆ is 12.5%, and a mass percent of the fluoroethylene carbonate is 5%.

### 5. Preparing a separator

Using a 7 µm-thick polyethylene (PE) film as a separator.

### 6. Preparing a lithium-ion battery

Stacking the positive electrode plate, the separator, and the negative electrode plate sequentially, and winding the stacked structure to obtain an electrode assembly. Placing the electrode assembly into an outer package, injecting the electrolyte solution, and performing steps such as sealing, standing, chemical formation, and shaping to obtain a lithium-ion battery. A designed potential range of the lithium-ion battery is 2.0 V to 4.53 V.

### Embodiment 2

### Preparing the hard carbon material

Adding glucose at a molar fraction of 0.16 and sodium hydroxide at a molar fraction of 0.05 into deionized water, where the mass percent of the deionized water is 10 times the mass percent of the glucose. Stirring well, dissolving the constituents thoroughly, and then increasing the temperature to 190 °C, keeping reaction for 12 hours, and crushing and drying the resultant product to obtain a precursor material. Putting the precursor material in an inert atmosphere. Increasing the temperature to 900 °C at a speed of 3 °C/min, and then keeping the temperature constant for 4 hours to pre-carbonize the material.

Other steps are the same as those in Embodiment 1.

### Embodiments 3 to 6

The differences from Embodiment 1 include: during the preparation of the hard carbon materials in Embodiments 3 to 6, the reactant monomers I of the precursor material are changed from resorcinol to 2-hydroxymethylphenol, 2,4-dihydroxybenzoic acid, 2,4,6-trihydroxymethylphenol, and 5-hydroxyisophthalic acid, respectively. Other steps are the same.

### Embodiments 7 to 10

The differences from Embodiment 1 include: during the preparation of the hard carbon materials in Embodiments 7 to 10, the catalysts of the precursor material are changed to lithium hydroxide, potassium hydroxide, cesium hydroxide, and magnesium hydroxide, respectively. Other steps are the same.

### Embodiment 11

The differences from Embodiment 1 include: during the preparation of the hard carbon material, the carbonized product is directly prepared from sodium polyacrylate that is crushed and sifted after heat treatment under the same heat treatment conditions. Other steps are the same.

### Embodiment 12

The differences from Embodiment 1 include: during the preparation of the hard carbon material, the carbonized product is directly prepared from sodium lignosulfonate that is crushed and sifted after heat treatment under the same heat treatment conditions. Other steps are the same.

### Comparative Embodiment 1

The differences from Embodiment 1 include: artificial graphite is used as a negative active material instead, and the designed potential range of the lithium-ion battery is adjusted to a range of 3.0 V to 4.48 V Other steps are the same.

### Test Part

Disassembling a fully discharged lithium-ion battery, taking out a negative electrode, soaking the negative electrode in dimethyl carbonate (DMC) for 20 minutes, and then rinsing the negative electrode with the DMC and acetone sequentially to remove the electrolyte solution and superficial SEI film. Subsequently, putting the negative electrode in an oven and baking it at 80 °C for 12 hours to obtain a treated negative electrode plate. Scraping off the powder from the negative electrode plate with a scraper, and heat-treating the scraped powder in a tube furnace at 400 °C for 4 hours under a protection condition of an argon atmosphere to remove the binder adhering to the surface of the negative active material, so as to obtain a negative active material. Performing the following tests for the obtained negative active material layer and negative active material.

### (1) XRD test for the hard carbon material

### Test instrument: X-ray powder diffractometer (model: Bruker D8 ADVANCE)

Test parameters: The target is copper and the radiation source is Cu Kα; the voltage and current are 40 KV and 40 mA respectively; the scanning angle range is 5° to 80°; the scanning step length is 0.00836°; and the time spent on each step length is 0.3 s.

### (2) Testing the volume median diameter Dv₅₀ of the hard carbon material

### Test instrument: Malvern particle size analyzer (Mastersizer 2000E)

Test steps: Dispersing the negative active material in an ethanol dispersant, sonicating the material for 30 minutes to obtain a specimen, adding the specimen into the Malvern particle size analyzer, and measuring Dv₅₀ of the hard carbon material.

### (3) Measuring the specific surface area of the hard carbon material

### Test instrument: specific surface area analyzer (TristarII3020M)

Measuring the specific surface area of the negative active material by a nitrogen adsorption/desorption method in the following steps: Drying a specimen of the negative active material in a vacuum oven, and then putting the specimen into a specimen tube and measuring the specific surface area in the analyzer.

### (4) Testing the gravimetric capacity of the hard carbon material

Mixing ingredients of the negative active material to obtain a slurry, and applying and drying the slurry to obtain a negative electrode plate. Using a lithium sheet as a positive electrode, and assembling the negative electrode plate and the positive electrode into a button battery for testing.

Discharging the button battery at a current of 0.05 C until the voltage reaches 0 mV, and then discharging the battery at a current of 50 µA until the voltage reaches 0 mV, and then discharging the battery at a current of 10 µA until the voltage reaches 0 mV. Charging the battery at a current of 0.1 C until the voltage reaches 2.5 V. Recording a capacity of the button battery at this time. Calculating the gravimetric capacity by dividing the capacity by the mass of the active material on the negative electrode plate. 0.05 C is a current value that is 0.05 times the gravimetric capacity, and 0.1 C is a current value that is 0.1 times the gravimetric capacity. Dividing the charge capacity by the discharge capacity to obtain a first-cycle Coulombic efficiency. Dividing the charge energy by the charge capacity to obtain an average delithiation potential. Dividing the gravimetric capacity in the charging voltage window of 0 V to 0.15 V by the total gravimetric capacity to obtain C₁/C₀, that is, a ratio of the delithiation gravimetric capacity in 0 V to 0.15 V to the total gravimetric capacity.

### (5) Testing the pore size distribution of the hard carbon material

### Test instrument: ASAP2460 physical adsorption analyzer

Pretreating negative active material powder by drying and degassing the powder, measuring different amounts of adsorbed nitrogen under different test pressures in a nitrogen atmosphere by use of the ASAP2460 physical adsorption analyzer, and plotting adsorption-and-desorption isotherms. Determining the shape of the pores based on the shape of a hysteresis loop, and fitting pore size distribution curves of the pore structure and the micropore structure by using a DFT model. Calculating a pore volume V1 cc/g of the pores and a pore volume V2 cc/g of the micropores.

### (6) Small-angle X-ray scattering test for the hard carbon material

Performing a small-angle X-ray scattering (SAXS) test for a powder specimen with an SAXSess (Anton Paar) instrument by using CuKα as a target material, collimating the X-ray beam through a slit, and determining how the scattering intensity varies within a scattering vector range of 0.01 nm⁻¹ to 7 nm⁻¹ of the specimen.

### (7) Testing the mass percent A% of the metal element M of the hard carbon material based on the total mass of the hard carbon material

The mass percent A% of the metal element of the hard carbon material based on the mass of the hard carbon material may be determined by using inductively coupled plasma (ICP) optical emission spectroscopy. The test process includes: weighing out 0.5 gram of powder of the sample, mixing the powder with 10 mL of HNO₃ solution, dissolving the trace elements in the powder into the solution by means of microwave digestion, and introducing the digested solution into an inductively coupled plasma optical emission spectrometer (ICP-OES) light source, so that the ICP-OES instrument detects the content of each different substance based on the characteristic radiation energy emitted during radiative transition when outer electrons of gaseous atoms in the specimen material return to a ground state from an excited state after the gaseous atoms are excited.

### (8) Testing the mass percent B% of the non-metal element R of the hard carbon material based on the total mass of the hard carbon material

Taking a hard carbon material specimen obtained in the above method, testing the specimen by using an Elementar Unicube elemental analyzer, applying the CHN mode and O mode of the elemental analyzer separately to obtain the mass percent of the elements C, H, O, and N of the hard carbon material respectively, so as to obtain the mass percent B% of the non-metal elements of the hard carbon material based on the total mass of the hard carbon material.

### (9) Testing the I_{D}/I_{G} ratio of the hard carbon material

Testing the degree of surface defects of the specimen by using a laser microscopic confocal Raman spectrometer, where, I_{D} represents a peak intensity with a Raman shift of 1300 cm⁻¹ to 1400 cm⁻¹ in a Raman spectroscopy test, and I_{G} represents a peak intensity with a Raman shift of 1550 cm⁻¹ to 1650 cm⁻¹ in a Raman spectroscopy test. Testing a plurality of sites for each specimen, so that a standard deviation value between the sites represents the uniformity of surface defects in each different region. The average value and the standard deviation value of the I_{D}/I_{G} ratio of the negative active material are obtained by the method: taking an unsifted negative active material, testing 100 sites of the material to obtain the corresponding I_{D}/I_{G} ratio values, and calculating the average value and the standard deviation values of the 100 ratio values.

### (10) Testing the porosity of the negative active material layer

Making a complete disc of the negative active material layer into a specimen. Testing 30 specimens for each embodiment or comparative embodiment, where the volume of each specimen is approximately 0.35 cm³. Testing the porosity of the negative active material layer with reference to the standard GB/T24586-2009 *Iron Ores-Determination of Apparent Density, True Density And Porosity.*

### (11) Testing the compacted density PD of the negative active material layer

Weighing a piece of a negative electrode plate with an area of S by using an electronic balance (both sides of the negative current collector are coated with the negative active material layer), so as to obtain a weight denoted as Wi. Measuring the thickness T₁ of the negative electrode plate with a high-precision micrometer. Washing off the negative active material layer by using a solvent and performing drying. Measuring the weight of the negative current collector, denoted as W₂. Measuring the thickness T₂ of the negative current collector with a high-precision micrometer. Calculating the compacted density of the negative active material layer on a single side of the negative current collector as: PD = (W₁ - W₂)/[(T₁ - T₂)·S],

### (12) Testing the energy density of the lithium-ion battery

Testing the lithium-ion batteries in groups, each group containing 5 batteries. First, charging and discharging the batteries for a first cycle in a 25 °C environment, charging the battery at a constant current of 0.5 C until the voltage reaches an upper-limit voltage, and then charging the battery at a constant voltage. Subsequently, discharging the batteries at a constant current of 0.2 C until the voltage reaches a cut-off voltage. Calculating an energy density percentage of the battery in each embodiment or comparative embodiment relative to Comparative Embodiment 1.

The upper limit of the charge voltage of a lithium-ion battery that employs a graphite-containing negative active material is 4.48 V, and the discharge cut-off voltage of the battery is 3.0 V The upper limit of the charge voltage of a lithium-ion battery that employs a negative active material containing pure hard carbon is 4.53 V, and the discharge cut-off voltage of the battery is 2.0 V

### (13) Testing the cycle performance of the lithium-ion battery

Testing the lithium-ion batteries in groups, each group containing 5 batteries. Charging and discharging the lithium-ion battery repeatedly in the following steps, and calculating the discharge capacity retention rate and the thickness expansion rate of the lithium-ion battery:

First, charging and discharging the lithium-ion battery for a first cycle in a 25 °C environment. Charging the battery at a constant current of 1 C until the voltage reaches an upper limit, and then charging the battery at a constant voltage. Subsequently, discharging the battery at a constant current of 1 C until the voltage reaches a cut-off voltage. Recording the first-cycle discharge capacity and the thickness of a fully charged battery cell. Subsequently, repeating the charge-and-discharge steps for 800 cycles, and recording the 800^{th}-cycle discharge capacity and the thickness of the fully charged battery cell. The upper limit of the charge voltage of a lithium-ion battery that employs a negative active material containing graphite or a graphite-doped substance is 4.48 V, and the discharge cut-off voltage of the battery is 3.0 V. The upper limit of the charge voltage of a lithium-ion battery that employs a negative active material containing pure hard carbon is 4.53 V, and the discharge cut-off voltage of the battery is 2.0 V. Cycle capacity retention rate = (800th-cycle discharge capacity/first-cycle discharge capacity) × 100%; and Thickness expansion rate of the battery cell cycled = (800th-cycle thickness of the fully charged battery cell - first-cycle thickness of the fully charged battery cell)/first-cycle thickness of the fully charged battery cell × 100%.

Table 1A, Table 1B, and Table 1C show the test data of different embodiments and comparative embodiments.

**Table 1A (To Be Continued)**

| | Embodiment 1 | Embodiment 2 | Embodiment 3 | Embodiment 4 |
|---|---|---|---|---|
| Is a convex peak exhibited within a scattering vector range of 0.1 nm⁻¹ to 7 nm⁻¹ | Yes | Yes | Yes | Yes |
| Full-width-at-half-maximum L1 (nm⁻¹) | 0.1 | 0.3 | 1.2 | 1.5 |
| Pore volume in adsorption test V1 (cc/g) | 0.01 | 0.009 | 0.008 | 0.007 |
| Micropore volume in adsorption test V2 (cc/g) | < 0.01 | < 0.01 | < 0.01 | < 0.01 |
| Mass percent of metal element M based on the total mass of the hard carbon material A (%) | 0.011 | 0.015 | 0.015 | 0.017 |
| Mass percent of non-metal element R based on the total mass of the hard carbon material B (%) | 0.02 | 0.02 | 0.02 | 0.03 |
| "C2 mAh/g"/"C1 mAh/g" | 0.64 | 0.66 | 0.65 | 0.64 |
| "C1 mAh/g"/"C0 mAh/g" | 0.86 | 0.88 | 0.90 | 0.87 |
| "C3 mAh/g"/"C1 mAh/g" | 0.87 | 0.89 | 0.92 | 0.87 |
| Average delithiation potential V0 | 0.33 | 0.25 | 0.33 | 0.25 |
| Gravimetric capacity C4 (mAh/g) | 518 | 652 | 527 | 625 |
| I_{D}/I_{G} | 1 | 1.1 | 1 | 0.9 |
| Dv₅₀ (µm) | 12 | 11 | 11 | 11 |
| Specific surface area S 1 (m²/g) | 12.8 | 5 | 14.3 | 6.7 |
| Compacted density of negative active material layer PD (g/cm³) | 1 | 1.1 | 1.1 | 1.1 |
| Porosity of negative active material layer S (%) | 21 | 28 | 23 | 22 |
| Percentage of energy density of pouch-type battery relative to Comparative Embodiment 1 | 99% | 101% | 98% | 102% |
| Change in thickness of battery cell cycled for 800 cycles | 5.40% | 6.50% | 4.50% | 4.10% |
| Capacity retention rate of battery cell cycled for 800 cycles | 90% | 88% | 89% | 89% |

**Table 1B (Continued)**

| | Embodiment 5 | Embodiment 6 | Embodiment 7 | Embodiment 8 | Embodiment 9 |
|---|---|---|---|---|---|
| Is a convex peak exhibited within a scattering vector range of 0.1 nm⁻¹ to 7 nm⁻¹ | Yes | Yes | Yes | Yes | Yes |
| Full-width-at-half-maximum L1 (nm⁻¹) | 0.8 | 2.6 | 1.2 | 2.8 | 2.3 |
| Pore volume in adsorption test V1 (cc/g) | 0.015 | 0.03 | 0.015 | 0.016 | 0.06 |
| Micropore volume in adsorption test V2 (cc/g) | < 0.01 | < 0.01 | < 0.01 | < 0.01 | < 0.01 |
| Mass percent of metal element M based on the total mass of the hard carbon material A (%) | 0.019 | 0.014 | 0.017 | 0.012 | 0.017 |
| Mass percent of non-metal element R based on the total mass of the hard carbon material B (%) | 0.02 | 0.02 | 0.02 | 0.02 | 0.02 |
| "C2 mAh/g"/"C1 mAh/g" | 0.74 | 0.66 | 0.61 | 0.69 | 0.77 |
| "C1 mAh/g"/"C0 mAh/g" | 0.86 | 0.86 | 0.86 | 0.90 | 0.83 |
| "C3 mAh/g"/"C1 mAh/g" | 0.87 | 0.91 | 0.88 | 0.92 | 0.85 |
| Average delithiation potential V0 | 0.3 | 0.27 | 0.28 | 0.28 | 0.29 |
| Gravimetric capacity C4 (mAh/g) | 525 | 634 | 730 | 761 | 549 |
| I_{D}/I_{G} | 1.2 | 1.1 | 1.2 | 1.2 | 1.1 |
| Dv₅₀ (µm) | 11 | 10 | 10 | 11 | 10 |
| Specific surface area S1 (m²/g) | 6.4 | 10.3 | 2.3 | 3.5 | 5.1 |
| Compacted density of negative active material layer PD (g/cm³) | 1.1 | 1 | 0.95 | 0.9 | 1 |
| Porosity of negative active material layer S (%) | 28 | 29 | 30 | 31 | 27 |
| Percentage of energy density of pouch-type battery | 97% | 102% | 104% | 104% | 95% |
| relative to Comparative Embodiment 1 | | | | | |
| Change in thickness of battery cell cycled for 800 cycles | 4.50% | 4.90% | 4.90% | 4.46% | 4.40% |
| Capacity retention rate of battery cell cycled for 800 cycles | 90% | 88% | 88% | 89% | 89% |

**Table 1C (Continued)**

| | Embodiment 10 | Embodiment 11 | Embodiment 12 | Comparative Embodiment 1 |
|---|---|---|---|---|
| Is a convex peak exhibited within a scattering vector range of 0.1 nm⁻¹ to 7 nm⁻¹ | Yes | Yes | Yes | No |
| Full-width-at-half-maximum L1 (nm⁻¹) | 1.9 | 2.6 | 3.4 | \ |
| Pore volume in adsorption test V1 (cc/g) | 0.025 | 0.02 | 0.05 | < 0.01 |
| Micropore volume in adsorption test V2 (cc/g) | < 0.01 | < 0.01 | < 0.01 | < 0.01 |
| Mass percent of metal element M based on the total mass of the hard carbon material A (%) | 0.007 | 0.015 | 0.019 | < 0.01 |
| Mass percent of non-metal element R based on the total mass of the hard carbon material B (%) | 0.02 | 0.03 | 0.01 | < 0.01 |
| "C2 mAh/g"/"C1 mAh/g" | 0.57 | 0.65 | 0.67 | / |
| "C1 mAh/g"/"C0 mAh/g" | 0.90 | 0.86 | 0.80 | 0.94 |
| "C3 mAh/g"/"C1 mAh/g" | 0.75 | 0.88 | 0.9 | 0.98 |
| Average delithiation potential V0 | 0.36 | 0.23 | 0.24 | 0.19 |
| Gravimetric capacity C4 (mAh/g) | 490 | 571 | 579 | 355 |
| I_{D}/I_{G} | 1.1 | 1.2 | 1 | 0.2 |
| Dv₅₀ (µm) | 11 | 10 | 12 | 10 |
| Specific surface area S1 (m²/g) | 3.4 | 13.7 | 24.7 | 1.1 |
| Compacted density of negative active material layer PD (g/cm³) | 1.1 | 1.1 | 1 | 1.6 |
| Porosity of negative active material layer S (%) | 25 | 27 | 22 | 15 |
| Percentage of energy density of pouch-type battery relative to Comparative Embodiment 1 | 98% | 101% | 99% | 100% |
| Change in thickness of battery cell cycled for 800 cycles | 4.50% | 6.90% | 5.60% | 11.20% |
| Capacity retention rate of battery cell cycled for 800 cycles | 90% | 91% | 89% | 85% |

As can be seen from Embodiments 1 to 12 and Comparative Embodiment 1 in Table 1A, Table 1B, and Table 1C as well as the accompanying drawings, when used as a negative active material in an electrochemical device, the hard carbon material disclosed in an embodiment of this application enhances both the cycle performance and the capacity retention rate of the electrochemical device.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A hard carbon material, wherein the hard carbon material has a pore structure, the pore structure comprises micropores, a pore volume of the micropores of the hard carbon material measured by a nitrogen adsorption method is V2, and 0 cc/g < V2 ≤ 0.01 cc/g; wherein
a scattering vector of the hard carbon material in a small-angle X-ray scattering spectrum is N1, and 0.1 nm⁻¹ ≤ N1 ≤ 7 nm⁻¹, and the hard carbon material exhibits a scattering intensity convex peak, a full-width-at-half-maximum of the convex peak is L1, and 0.1 nm⁻¹ ≤ L1 ≤ 3.5 nm⁻¹.

2. The hard carbon material according to claim 1, wherein a pore volume of the pore structure of the hard carbon material measured by the nitrogen adsorption method is V1, and 0 cc/g < V1 ≤ 0.05 cc/ g.

3. The hard carbon material according to claim 1 or 2, wherein the hard carbon material contains a metal element M; the metal element M comprises at least one of Na, K, Cs, Mg, Al, Ca, Rb, or Zn; based on a total mass of the hard carbon material, a mass percent of the metal element M is A%, and 0 < A ≤ 0.02.

4. The hard carbon material according to any one of claims 1 to 3, wherein the hard carbon material contains a non-metal element R other than carbon, the non-metal element R comprises at least one of H, N, or O; based on a total mass of the hard carbon material, a mass percent of the non-metal element R is B%, and 0 < B ≤ 0.05.

5. The hard carbon material according to any one of claims 1 to 4, wherein an X-ray diffraction pattern of the hard carbon material shows a characteristic peak corresponding to a diffraction angle of 18° to 30°, a full-width-at-half-maximum of the characteristic peak is L2, and 4° ≤ L2 ≤ 12°.

6. The hard carbon material according to any one of claims 1 to 5, wherein the hard carbon material satisfies at least one of the following conditions (1) to (4):
(1) a first-cycle delithiation capacity of the hard carbon material is C1 mAh/g, a delithiation capacity of the hard carbon material in a cycling voltage window of 0 V to 0.15 V is C2 mAh/g, and 0.55 ≤ C2/C1 ≤ 0.80;
(2) a first-cycle total lithiation capacity of the hard carbon material is C0 mAh/g, and a first-cycle delithiation capacity of the hard carbon material is C1 mAh/g, and 0.80 ≤ C1/C0 ≤ 0.94;
(3) a first-cycle delithiation capacity of the hard carbon material is C1 mAh/g, a delithiation capacity of the hard carbon material in a cycling voltage window of 0 V to 0.8 V is C3 mAh/g, and 0.85 ≤ C3/C1 ≤ 0.93;
(4) a gravimetric capacity of the hard carbon material is 500 mAh/g to 800 mAh/g.

7. The hard carbon material according to any one of claims 1 to 6, wherein an average delithiation potential of the hard carbon material is V0, and 0.20 V ≤ V0 ≤ 0.36 V.

8. The hard carbon material according to any one of claims 1 to 7, wherein the hard carbon material satisfies at least one of the following conditions:
condition a: in a Raman spectrum of the hard carbon material obtained in a Raman test, a peak intensity of a peak D is I_{D}, a peak intensity of a peak G is I_{G}, and 0.5 ≤ I_{D}/I_{G} ≤ 1.5; or
condition c: a specific surface area of the hard carbon material is S1, and 0.5 m²/g ≤ S1 ≤ 50 m²/g.

9. The hard carbon material according to any one of claims 1 to 8, wherein Dv₅₀ of the hard carbon material satisfies: 3 µm ≤ Dv₅₀ ≤ 15 µm

10. A negative electrode plate, wherein the negative electrode plate comprisesa negative current collector; and a negative active material layer disposed on at least one surface of the negative current collector, wherein the negative active material layer comprises a negative active material, and the negative active material comprises the hard carbon material according to any one of claims 1 to 9.

11. The negative electrode plate according to claim 10, wherein a compacted density of the negative active material layer is PD g/cm³, and 0.8 ≤ PD ≤1.3.

12. The negative electrode plate according to claim 10 or 11, wherein a porosity of the negative active material layer is S%, and 10 ≤ S ≤ 40.

13. An electrochemical device, wherein the electrochemical device comprises the negative electrode plate according to any one of claims 10 to 12.
